# FASCICULE DE BREVET EUROPEEN

(11) **EP 0 810 451 B1**
(45) Date de publication et mention de la délivrance du brevet: **16.03.2005**
(21) Numéro de dépôt: 97420080.0
(22) Date de dépôt: 28.05.1997
(51) Int. Cl.: G01V 15/00, G01V 3/02

(54) **Dispositif de détection d'ouvrages enterrés**
Detektionsgerät für unterirdische Bauwerke
Detection device for underground constructions

(30) Priorité: 29.05.1996 FR 9606833
(43) Date de publication de la demande: 03.12.1997
(73) Titulaire: PLYMOUTH FRANCAISE, 69320 Feyzin (FR)
(72) Inventeur: Arnaud, Daniel, 42100 Saint Etienne (FR)
(74) Mandataire: Maureau, Philippe

(56) Documents cités:
- EP-A- 0 577 018
- WO-A-95/00863
- FR-A- 2 583 175
- FR-A- 2 704 380
- US-A- 4 063 161
- US-A- 4 623 282
- US-A- 4 699 838
- US-A- 4 767 354
- US-A- 5 537 456

## Description

La présente invention a pour objet un dispositif de détection d'ouvrages enterrés.

Il est connu, aujourd'hui, de disposer dans le sol au-dessus des conduites souterraines, qu'il s'agisse de conduites de fluide telles qu'eau ou gaz, ou de conduites de câbles électriques, des dispositifs avertisseurs qui sont enterrés au-dessus de ces conduites lors de leur pose. Cela permet, si des travaux sont effectués ultérieurement, de détecter la présence d'une conduite avant d'atteindre celle-ci. Les dispositifs avertisseurs se présentent le plus souvent sous la forme de grillages souples réalisés en matière synthétique, comportant généralement des éléments de signalisation susceptibles, lors de fouilles, par exemple lors de la réalisation d'une tranchée à l'aide du godet d'une pelleteuse, d'être séparés de la structure initiale de l'ensemble du grillage, tout en conservant, au moins sur une certaine longueur, leur forme d'origine, ce qui permet à ces éléments de signalisation d'être parfaitement visibles, tant dans le godet de la pelleteuse que sur les parois de la tranchée ainsi creusée. Il s'agit d'une signalisation qui est purement visuelle.

En complément de cette signalisation visuelle, il existe d'autres techniques de repérage qui sont de plus en plus appliquées à l'échelle industrielle, et mettent en oeuvre des phénomènes électriques ou électromagnétiques, en étant basés essentiellement sur la détection soit d'éléments conducteurs linéaires (systèmes continus), soit de circuits de résonance (systèmes discontinus).

Dans le cas d'éléments conducteurs linéaires, il s'agit de produits constitués de fils ou de rubans métalliques isolés ou non, qui sont fixés sur des supports constitués par les dispositifs avertisseurs eux-mêmes.

Dans ce cas, il se produit une détérioration du dispositif de détection sous l'action, par exemple, du godet d'une pelleteuse, en même temps que le grillage avertisseur est détérioré en remplissant sa fonction de visualisation.

Le document EP 0 577 018 décrit un dispositif avertisseur sous forme d'une bande de matière synthétique sur laquelle sont fixées des bandes métalliques permettant une détection par voie inductive.

Le document WO 95 00863 décrit un dispositif de détection d'un câble électrique utilisant le câble électrique lui-même pour véhiculer une impulsion électrique, alors même que le câble est en exploitation.

Le but de l'invention est de fournir un dispositif de détection d'ouvrages enterrés, dans lequel il soit possible de dissocier les fonctions de signalisation visuelle et de détection, et dans lequel cette détection puisse être effectuée de façon sûre et simple.

A cet effet, le dispositif qu'elle concerne comprend :
■ deux éléments conducteurs linéaires qui, destinés à être enterré indépendamment d'un grillage avertisseur, sont recouverts d'un matériau isolant,
■ un système de connexion logé dans un boîtier hermétique, à une extrémité de chaque élément conducteur,
■ le système de connexion comportant des connecteurs réalisant la liaison entre les éléments conducteurs,
■ le système de connexion comprenant un mise à la terre et au moins un point de contact permettant l'injection d'un signal de détection, avec ou sans ouverture du circuit conducteur au niveau de ce point.

L'élément conducteur est indépendant du support constitué, par exemple, par un grillage avertisseur en matière synthétique. Cette dissociation des produits entraîne une séparation des fonctions de signalisation visuelle et de détection. L'élément conducteur, généralement constitué par un fil métallique en acier inoxydable recouvert de matière isolante, peut être positionné à proximité de l'ouvrage enterré, tandis que le grillage avertisseur est, pour sa part, positionné à distance normalisée de l'ouvrage. Cette disposition assure le maintien de la continuité électrique de l'élément conducteur malgré une éventuelle rupture du dispositif avertisseur provoquée lors de la réalisation d'une tranchée. En outre, l'opérateur devant intervenir à proximité de l'ouvrage enterré a connaissance de l'implantation du système de connexion et peut intervenir sur celui-ci pour détecter la présence de l'élément conducteur et, par suite, la position de l'ouvrage enterré.

Avantageusement, l'élément conducteur est gainé d'une matière isolante colorée dans la masse, selon les codes de couleurs usuellement retenus pour les dispositifs avertisseurs normalisés.

La détection peut consister à capter un champ électromagnétique créé par un courant alternatif circulant dans l'élément conducteur considéré, obtenu soit par injection directe à l'aide d'un générateur de tension, au niveau du système de connexion, soit par injection indirecte lorsqu'un contact direct avec l'élément conducteur n'est pas possible. La technique de détection par injection se développant de plus en plus, l'accès à l'élément conducteur doit être aisé et sans risque pour le personnel intervenant, ce qui est obtenu en logeant chaque extrémité d'un conducteur dans un boîtier.

Ce boîtier peut être disposé soit à intérieur d'une galerie technique, soit sur une borne non enterrée.

La fermeture hermétique du boîtier protège les composants de la corrosion, la nature du matériau constitutif du boîtier assurant une protection mécanique des composants.

Dans ce cas, les éléments détectables font l'objet d'une identification permettant de reconnaître le propriétaire de l'ouvrage enterré qu'ils sont censés signaler, d'autant plus que plusieurs éléments conducteurs signalant des ouvrages de natures différentes peuvent se trouver dans les mêmes aménagements, ce qui est le cas des galeries techniques.

La présente invention concerne également le système de connexion permettant le raccordement de plusieurs tronçons d'éléments conducteurs sans perte d'isolation, ainsi qu'une ouverture du circuit conducteur pour réaliser l'injection du signal de détection soit sur la partie amont, soit sur la partie aval.

Suivant différentes caractéristiques de l'invention :
- le système de connexion comprend des connecteurs courants faibles, tels que de type MX, réalisant la liaison entre les éléments conducteurs,
- le système de connexion comprend une mise à la terre de l'élément conducteur,
- le système de connexion comprend un surtenseur jouant le rôle de parafoudre protégeant l'élément conducteur en cas de surcharge éventuelle de l'élément conducteur,
- le système de connexion comprend un connecteur de type MXP, équipé d'un surtenseur et d'une mise à la terre, et
- le système de connexion comprend au moins un point de contact avec l'élément conducteur permettant l'injection du signal de détection, avec ou sans ouverture du circuit conducteur au niveau de ce point.

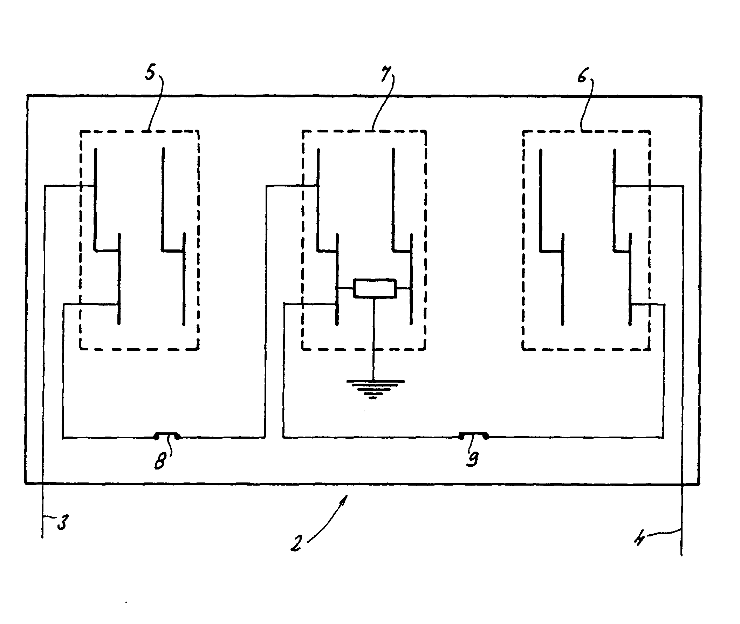

De toute façon, l'invention sera bien comprise à l'aide de la description qui suit, en référence au dessin schématique annexé, dont la figure unique représente un boîtier contenant le système de connexion de deux éléments conducteurs.

La figure unique représente un boîtier 2, de façon très schématique, équipé d'un rail de fixation non représenté. A l'intérieur de ce boîtier 2 pénètrent un élément conducteur amont 3 et un élément conducteur aval 4, chacun de ces éléments conducteurs étant constitué par exemple par un fil en acier inoxydable gainé d'un matériau isolant.

Le boîtier contient un connecteur 5 et un connecteur 6 de type MX, par exemple, raccordés respectivement à l'élément détectable 3 amont et à l'élément détectable 4 aval. Le boîtier contient également un connecteur 7, par exemple de type MXP, équipé d'une mise à la terre et d'un surtenseur. Le système de connexion comprend enfin des interrupteurs 8 et 9 destinés à injecter un courant respectivement dans les éléments conducteurs 3 et 4 en vue de la détection de ceux-ci.

Comme il ressort de ce qui précède, l'invention apporte une grande amélioration à la technique existante en fournissant un dispositif de détection d'ouvrages enterrés complémentaire et indépendant des dispositifs avertisseurs visuels, d'une conception simple, et d'une structure très fiable garantissant de parfaites conditions de détection et de repérage.

Comme il va de soi, l'invention ne se limite pas à la seule d'exécution de ce dispositif décrite ci-dessus à titre d'exemple, elle en embrasse au contraire toutes les variantes définies par les revendications suivantes.

## Revendications

1. Dispositif de détection d'ouvrages enterrés, **caractérisé en ce qu'**il comprend :
■ deux éléments conducteurs linéaires (3, 4) qui, destinés à être enterré indépendamment d'un grillage avertisseur, sont recouverts d'un matériau isolant,
■ un système de connexion (2) logé dans un boîtier hermétique, à une extrémité de chaque élément conducteur (3, 4),
■ le système de connexion comportant des connecteurs (5, 6) réalisant la liaison entre les éléments conducteurs (3, 4),
■ le système de connexion comprenant un mise à la terre (7) et au moins un point de contact (8, 9) permettant l'injection d'un signal de détection, avec ou sans ouverture du circuit conducteur au niveau de ce point.

2. Dispositif selon la revendication 1, **caractérisé en ce que** chaque élément conducteur (3, 4) est gainé d'une matière isolante colorée dans la masse, selon les codes de couleurs usuellement retenus pour les dispositifs avertisseurs normalisés.

3. Dispositif selon l'une quelconque des revendications 1 et 2, **caractérisé en ce que** le système de connexion (2) comprend des connecteurs (5, 6) courants faibles, tels que de type MX, réalisant la liaison entre les éléments conducteurs (3, 4).

4. Dispositif selon l'une quelconque des revendications 1 à 3, **caractérisé en ce que** le système de connexion (2) comprend un surtenseur (7) jouant le rôle de parafoudre protégeant chaque élément conducteur en cas de surcharge éventuelle d'un élément conducteur.

5. Dispositif selon la revendication 4, **caractérisé en ce que** le système de connexion (2) comprend un connecteur (7) de type MXP, équipé d'un surtenseur et d'une mise à terre.

## Claims

1. Device for detecting buried works, **characterized in that** it comprises:
• two linear conductor elements (3, 4) which, intended to be buried independently of a warning mesh, are covered with an insulating material,
• a connection system (2) accommodated in a hermetic housing, at one end of each conductor element (3, 4),
• the connection system comprising connectors (5, 6) effecting the link between the conductor elements (3, 4),
• the connection system comprises an earthing facility (7) and at least one point of contact (8, 9) allowing the injection of a detection signal, with or without opening of the conductor circuit at this point.

2. Device according to Claim 1, **characterized in that** each conductor element (3, 4) is armoured with an insulating material coloured through its bulk, according to the colour codes usually adopted for standardized warning devices.

3. Device according to any one of Claims 1 and 2, **characterized in that** the connection system (2) comprises low current connectors (5, 6), such as of MX type, effecting the link between the conductor elements (3, 4).

4. Device according to any one of Claims 1 to 3, **characterized in that** the connection system (2) comprises a surge arrestor (7) playing the role of lightning arrestor protecting each conductor element in the event of an overload of a conductor element.

5. Device according to Claim 4, **characterized in that** the connection system (2) comprises a connector (7) of the MXP type, equipped with a surge arrestor and with an earthing facility.

## Patentansprüche

1. Detektionsvorrichtung für unterirdische Bauwerke, **dadurch gekennzeichnet, dass** sie umfasst:
* zwei lineare Leiterelemente (3, 4), welche dafür vorgesehen sind, unabhängig von einem Warngitter vergraben zu werden,und welche von einem Isolierenden Material bedeckt sind,
* ein in einem hermetischen Gehäuse angeordnetes Anschlusssystem (2) an einem Ende Jedes Leiterelements (3, 4),
* wobei das Anschlusssystem Anschlüsse (5, 6) umfasst, welche die Verbindung zwischen den Leiterelementen (3,4) herstellen,
* wobei das Anschlusssystem eine Erdung (7) und wenigstens einen Berührungspunkt (8, 9) umfasst, welcher die Eingabe eines Erfassungssignals mit oder ohne Öffnen des Leiterkreislaufs auf dem Niveau dieses Punktes ermöglicht.

2. Vorrichtung nach Anspruch 1, **dadurch gekennzeichnet, dass** jedes Leiterelement (3,4) umhüllt ist mit einem Material das isolierend und farbig ist in der Masse, gemäß den üblicherweise geltenden Farbcodierungen für Norm-Warnvorrichtungen.

3. Vorrichtung nach einem der Ansprüche 1 und 2, **dadurch gekennzeichnet, dass** das Anschlusssystem (2) Schwachstromanschlüsse (5, 6), beispielsweise vom Typ MX, umfasst, welche die Verbindung zwischen den Leiterelementen (3, 4) herstellen.

4. Vorrichtung nach einem der Ansprüche 1 bis 3, **dadurch gekennzeichnet, dass** das Anschlusssystem (2) ein Überspannungselement (7) umfasst, welches als Überspannungsschutz dient und jedes Leiterelement im Fall einer möglichen Überlastung eines Leiterelements schützt.

5. Vorrichtung nach Anspruch 4, **dadurch gekennzeichnet, dass** das Anschlusssystem (2) einen Anschluss (7) vom Typ MXP umfasst, der mit einem Überspannungselement und einer Erdung versehen ist.
